# DEMANDE DE BREVET EUROPEEN

(11) **EP 1 538 390 A2**
(43) Date de publication de la demande: **08.06.2005**
(21) Numéro de dépôt: 04300846.5
(22) Date de dépôt: 03.12.2004
(51) Int. Cl.: F17C 9/02

(54) **Système de chauffage de bouteilles de gaz liquéfié par induction**

(30) Priorité: 04.12.2003 FR 0350969
(71) Demandeur: Air Liquide Electronics Systems, 75007 Paris Cedex 07 (FR)
(72) Inventeur: Rameau, Guillaume, 38000, GRENOBLE (FR); Laurent, Valère, 38700, LA TRONCHE (FR); Breville, Thierry, 38410, VAULNAVEYS LE BAS (FR)
(74) Mandataire: Vesin, Jacques

(57) **Abrégé**

L'invention concerne un système pour délivrer du gaz stocké dans un récipient sous forme liquéfiée, ledit récipient comportant dans sa partie inférieure une phase liquéfiée dudit gaz et dans la partie supérieure une phase gazeuse dudit gaz, ce récipient comportant un moyen pour le connecter à un moyen d'utilisation ainsi qu'un moyen de chauffage de la partie inférieure dudit récipient ; selon l'invention, le gaz liquéfié et/ou l'enveloppe du récipient sont des éléments conducteurs électriques et les moyens de chauffage sont constitués par des moyens d'induction magnétiques capables de créer un champ magnétique alternatif dans l'enveloppe et/ou le liquide de manière à chauffer l'enveloppe dans sa partie inférieure et/ou le liquide dans le récipient, tout en limitant le chauffage du gaz par lesdits moyens.

## Description

La présente invention concerne un système pour délivrer du gaz stocké dans un récipient sous forme liquéfiée, ledit récipient comportant dans sa partie inférieure une phase liquéfiée dudit gaz et dans la partie supérieure une phase gazeuse dudit gaz, ce récipient comportant un moyen pour le connecter à un moyen d'utilisation ainsi qu'un moyen de chauffage de la partie inférieure dudit récipient.

L'industrie des semi-conducteurs est aujourd'hui confrontée à des besoins croissants en gaz dits spéciaux pour diverses étapes nécessaires à la fabrication des circuits intégrés. Certains de ces gaz spéciaux tels HCl, Cl₂, HBr, N₂O, NH₃, WF₆, BCl₃, 3MS, pour n'en citer que quelques-uns, sont liquéfiés à température ambiante, et posent de ce fait des difficultés pour leur distribution. Ces difficultés sont directement liées à leur pression et/ou à leur débit d'utilisation.

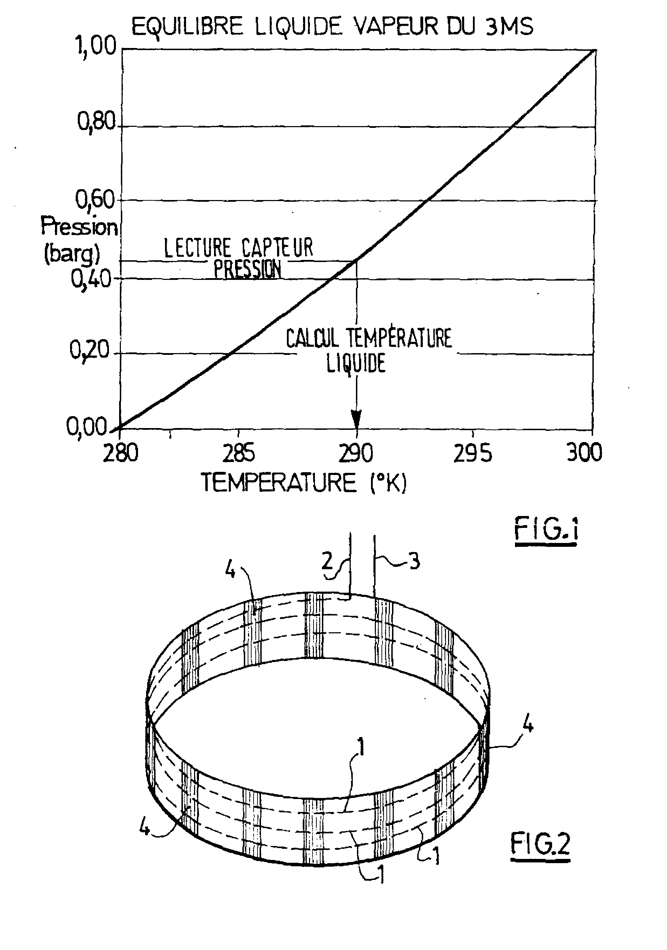

Un gaz liquéfié est composé de deux phases liquide et gazeuse en équilibre l'une avec l'autre. Cet équilibre implique qu'à une température donnée, un gaz liquéfié a une pression bien déterminée et que cette pression varie en fonction de la température selon une relation qui est propre à chaque gaz. Ainsi la Figure 1 montre une courbe d'équilibre des phases liquide et vapeur du trimethylsilane (appelé 3MS), donnant en fonction de la température, la pression du gaz en équilibre au-dessus de la phase liquide. On constate que la pression augmente à mesure que la température augmente et inversement.

Lorsque l'on soutire la phase gazeuse d'une bouteille de gaz liquéfié, une partie du liquide doit être transformée en gaz de manière à régénérer le gaz à mesure qu'il est utilisé afin de maintenir l'équilibre. Le liquide se met donc à bouillir en utilisant l'énergie disponible (typiquement l'énergie du milieu extérieur autour de la bouteille). Plus le débit de soutirage est élevé, plus ce besoin d'énergie est important et plus le liquide bout violemment et crée ainsi un risque important d'entraînement de gouttelettes chargées d'impuretés dans la phase gazeuse. Ces gouttelettes, non seulement contaminent le gaz, mais elles accélèrent également les phénomènes de corrosion et provoquent des instabilités au niveau de la régulation de débit et des mesures de pression. Si l'énergie disponible n'est pas suffisante pour gazéifier le liquide et régénérer ainsi la phase vapeur, la température - et donc la pression - chutent puisque l'équilibre doit être maintenu.

Un apport extérieur d'énergie par chauffage permet de limiter le refroidissement et la chute de pression observés. Plusieurs solutions sont alors envisageables.

Une solution illustrée par la Figure 1 consiste à chauffer le pied ou le fond de la bouteille en contrôlant la chauffe à l'aide de la pression dans la bouteille. Ceci permet de chauffer tant que la pression est inférieure à la pression correspondant à la température ambiante et de ne plus chauffer si le liquide atteint ou est à température ambiante. En maintenant le gaz à une température légèrement inférieure à la température ambiante, il est possible de s'affranchir du traçage du réseau de distribution sous réserve qu'il n'y ait pas de point froid le long de celui-ci. Un tel système est décrit dans les brevets US-A-5,761,911, US-A-6,076,359 et US-A-6,199,384.

D'une manière générale, les techniques de chauffage utilisées jusqu'à ce jour pour augmenter les débits de gaz liquéfiés consistent à chauffer le corps de la bouteille à l'aide d'un élément chauffant résistif de type ceinture chauffante, cordon chauffant, ou encore air chaud. Ce type de chauffage présente l'inconvénient d'un transfert d'énergie fortement limité par la conduction thermique de l'élément chauffant vers la bouteille, ce qui résulte en une limitation du débit utilisable malgré un apport d'énergie conséquent. En d'autres termes, le rendement énergétique de telles installations est faible.

D'une façon plus générale se pose le problème de l'augmentation de débit d'un gaz venant d'une bouteille où le gaz est stocké sous forme liquide. Un autre problème technique se pose lorsqu'on veut augmenter la pression du gaz délivré par la bouteille au-delà de sa pression d'équilibre avec le liquide dans la bouteille, à la température ambiante. Dans les deux cas, une solution qui peut être appliquée est celle décrite dans les brevets ci-dessus référencés, en augmentant la puissance transférée par le système de chauffage. Dans ce cas, on constate rapidement que le système de chauffage peut atteindre une température supérieure à 100°C, l'énergie calorifique transmise par conduction à la bouteille et/ou au liquide engendrant une élévation de température de la bouteille, au moins localement, telle que l'on constate une désorption d'impuretés absorbées sur les parois de la bouteille, telles que CO, CO₂, etc... ce qui engendre la délivrance d'un gaz contenant des impuretés telles que CO, CO₂, etc... ce qui n'est pas tolérable pour l'utilisateur, notamment dans le domaine de la fabrication des semi-conducteurs (mais également dans d'autres domaines techniques).

On se trouve donc confronté aujourd'hui au problème de l'élévation du débit et/ou de la pression du gaz délivré par un réservoir (bouteille, ...) sans engendrer d'impuretés additionnelles, ce qui irait à l'encontre du but recherché (puisqu'au contraire la vaporisation du gaz permet déjà d'éliminer les impuretés contenues dans le liquide et non aisément vaporisables).

Le système selon l'invention permet d'éviter ces inconvénients. Il est caractérisé en ce que le gaz liquéfié et/ou l'enveloppe du récipient sont des éléments conducteurs électriques et en ce que lesdits moyens de chauffage sont constitués par des moyens d'induction électro-magnétique capables de créer un champ magnétique alternatif dans l'enveloppe et/ou le liquide de manière à chauffer l'enveloppe dans sa partie inférieure et/ou le liquide dans le récipient, L'invention proposée consiste à chauffer les bouteilles de gaz liquéfié par induction : on a constaté que l'on obtenait ainsi un rendement bien supérieur pouvant atteindre 80 à 90 % sur de l'acier par exemple. Le chauffage par induction permet de s'affranchir du transfert d'énergie par conduction puisque les courants induits par l'inducteur chauffent directement le matériau de la bouteille dans son épaisseur. On constate ainsi des performances de cinq à dix fois supérieures aux performances d'un système de chauffage utilisant un élément chauffant à puissance installée égale, par exemple pour un gaz liquéfié tel que le C₄F₈, sans engendrer de désorption substantielle d'impuretés de la surface du récipient.

L'invention permet notamment de répondre à deux types de demandes susceptibles d'être faites par un utilisateur de gaz stocké dans un récipient, notamment sous forme liquide.

Le premier type de demande peut être par exemple de fournir le gaz sous forme gazeuse à un point d'utilisation à une pression supérieure à la pression d'équilibre du gaz avec le liquide dans la bouteille à température ambiante (lorsque la bouteille n'est pas chauffée). Pour cela, l'invention permet de chauffer la bouteille et/ou le liquide (ou le gaz) sans provoquer une désorption des impuretés de la surface interne de la bouteille et sans risques au niveau de la sécurité d'utilisation, la température du récipient au voisinage des moyens de chauffage par induction électro-magnétique restant faible et sans danger pour les utilisateurs. La désorption d'impuretés reste limitée dans la mesure où la pression demandée au point d'utilisation correspond à une température du gaz liquéfié dans le réservoir supérieure de 5 à 10°C à la température ambiante au plus (soit une température de 30°C typiquement). Ces moyens de chauffage peuvent être positionnés à une hauteur correspondant à la présence de liquide dans le récipient, mais de préférence sur toute la hauteur de la bouteille.

Le second type de demande peut être d'augmenter le débit de gaz à la sortie du récipient par rapport au cas où ledit récipient n'est pas chauffé mais tout en n'élevant pas substantiellement la température des parois du récipient (en général, moins de 35°C en température extérieure de récipient) afin d'éviter la désorption d'impuretés desdites parois.

L'invention peut donc s'appliquer à la distribution de gaz spéciaux liquéfiés, au transfert en phase gazeuse de gaz liquéfiés, notamment pour leur conditionnement et leur purification. L'invention permet de réduire considérablement le temps de transfert améliorant ainsi la productivité des installations. L'invention offre en outre l'avantage d'éviter des températures de surface élevées (40-50°C) qui favorisent la désorption d'espèces légères telles que CO, CO₂ dans le produit. La température de surface des bouteilles ne dépasse généralement pas environ 30°C avec le chauffage par induction tel que décrit dans la présente invention. De préférence, lorsqu'on réalise un transfert d'un premier récipient vers un second récipient, on s'assurera que le second récipient est suffisamment refroidi de manière à condenser le gaz dans le second récipient au moins aussi vite que l'on évapore celui-ci dans le premier.

L'invention ne se limite pas au chauffage de bouteilles de faible contenance (50 litres ou moins). Elle est applicable à tout type de réservoir, l'inducteur étant alors adapté à la géométrie dudit réservoir, et le générateur réglé pour fonctionner avec cet inducteur.

De préférence, le champ magnétique alternatif est créé à l'aide d'un générateur fonctionnant à une fréquence comprise entre 50 Hz et 4 MHz

Bien qu'il soit possible d'utiliser la fréquence secteur (50 Hz ou 60 Hz), ou des fréquences élevées, il est préférable, afin de limiter les coûts, de recourir à un générateur moyenne fréquence, c'est-à-dire de fréquences comprises entre 1 KHz et 100 KHz. L'inducteur est alors réalisé soit en fil de Litz, soit en feuillard métallique, soit en tube métallique refroidi et pour chaque type de matériau à chauffer, l'impédance du circuit résonnant (inducteur plus charge plus capacités de compensation) est adapté au mieux à l'impédance caractéristique du générateur. L'inducteur est positionné de préférence autour du pied de la bouteille ou sous le fond de la bouteille lorsque le récipient est une bouteille et autour du fond du récipient ou sous le fond du récipient, lorsqu'il s'agit d'un récipient autre qu'une bouteille.

De préférence, les moyens de chauffage sont constitués par au moins une spire d'un conducteur, de préférence entourant au moins 90 % du récipient.

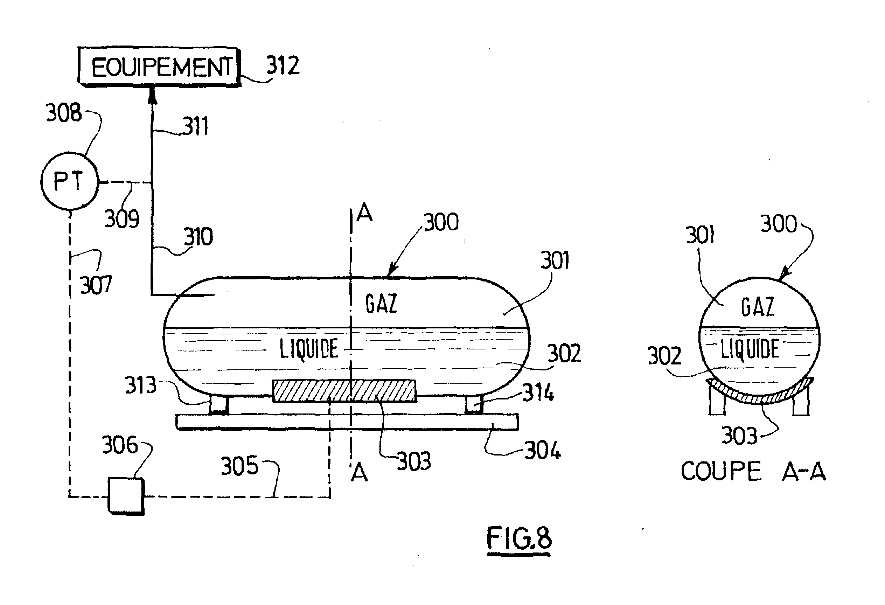

Si l'inducteur est placé sous le fond du récipient, il faut adapter sa forme à chaque type de fond de récipient. D'une manière générale, afin de réaliser un chauffage ayant un minimum d'efficacité, les moyens de chauffage à induction électro-magnétique selon l'invention seront constitués par au moins une spire de fil conducteur de section quelconque, d'épaisseur généralement au moins égale à 1 mm (avec ou sans ferrites disposées, généralement à espaces réguliers, le long de cette spire). Ce moyen de chauffage à induction électro-magnétique peut s'étendre depuis la partie inférieure du récipient (ou même être situé sous le récipient, avec au moins une spire sous le récipient au minimum lorsqu'on souhaite chauffer le dessous du récipient) jusqu'au sommet du récipient. La partie inférieure du récipient peut comprendre une ou plusieurs spires seulement sous le récipient (par exemple la base d'une bouteille) ou seulement à partir de la partie inférieure latérale du récipient, lorsqu'il s'agit d'une bouteille, ou une combinaison des deux, notamment lorsqu'il s'agit d'un récipient dont le fond et les parois latérales sont constitués d'une même surface continue, comme c'est la cas pour les récipients de la fig. 8 et suivantes décrites ci-après).

En général cependant, lorsqu'on désire augmenter le débit de gaz depuis le récipient jusqu'à l'utilisateur, on placera les moyens de chauffage à induction électro-magnétique dans la partie inférieure du récipient seulement (contrairement au cas décrit ci-avant où ceux-ci peuvent être localisés en toute position), de préférence à une hauteur qui correspond au plus à celle du liquide dans le récipient. Dans le cas d'un inducteur placé autour du pied de la bouteille, la hauteur de chauffe sera typiquement limitée à 50 mm. Dans tous les cas, l'objectif est de concentrer le chauffage sur la phase liquide afin de pouvoir, par exemple utiliser une régulation de température par mesure de la pression (comme décrit dans les brevets cités ci-avant). En effet, les bouteilles de gaz liquéfiés (ou autres récipients) ne sont en général jamais complètement vidées par les utilisateurs. On a constaté que si on limite la hauteur de chauffe sur le récipient à une hauteur correspondant au plus à 5 % en poids du liquide contenu dans le récipient, on a la quasi certitude de ne toujours chauffer que le liquide, ce qui est généralement le but recherché lorsqu'on veut augmenter le débit de gaz du récipient.

On utilisera de préférence un générateur qui permet de fonctionner avec plusieurs types d'inducteurs suivant le matériau et le diamètre des bouteilles à chauffer. Compte tenu du très bon rendement du chauffage par induction, il est possible de contrôler le chauffage de deux bouteilles ou plus en simultané à partir d'un seul générateur.

Il est également possible d'utiliser un inducteur unique qui fasse de préférence au moins le tour de la bouteille de diamètre le plus gros qu'il est prévu d'utiliser et qui s'enroule sur lui-même ou en hélice pour les bouteilles de diamètre inférieur. Cette solution permet de réduire le nombre d'inducteurs nécessaires mais conduit à un rendement plus faible. Toutefois, les essais ont montré que même dans cette configuration, les débits de gaz sont plus de 5 fois supérieurs à ceux qui peuvent être atteints à l'aide de systèmes chauffants résistifs (essais réalisés sur du C₄F₈ dans des bouteilles de 10 litres et 50 litres).

Les essais ont été réalisés avec un générateur demi pont de type cuisson industrielle par induction avec un inducteur en fil de Litz (fil multibrins isolés les uns des autres et torsadés) . D'autres mises en oeuvre sont possibles telles qu'un générateur de type industriel (demi pont ou pont complet, circuit série ou parallèle) - utilisé notamment en sidérurgie ou en traitement thermique - couplé à un inducteur refroidi à eau. Le rendement est alors encore meilleur. C'est une solution particulièrement adaptée au chauffage de bouteilles ou récipient en aluminium.

D'une manière générale, tout type de générateur auto-adaptatif en fréquence peut convenir, couplé avec un inducteur de préférence en fil de Litz, un feuillard ou un tube métallique sous réserve de bien dimensionner l'inducteur et de régler correctement l'adaptation au générateur. Il est également possible d'utiliser un générateur à fréquence fixe sous réserve alors d'optimiser la valeur de la capacité de compensation d'énergie réactive en fonction de la nature de la bouteille à chauffer, ou un générateur à fréquence variable pilotable en adaptant celle-ci à la fréquence de résonance du circuit oscillant.

Chaque inducteur peut être réalisé en fil de Litz, en feuillard métallique, ou en tube métallique refroidi (par exemple tube creux dans lequel circule un fluide de refroidissement), avec ou sans ferrite dans chaque cas, et en une ou plusieurs couches dans chaque cas. L'inducteur est de préférence placé sur le récipient de telle sorte que le chauffage soit concentré sur la phase liquide du gaz liquéfié . Mais l'invention est également applicable au cas d'un récipient contenant un fluide qui est sous forme supercritique.

Selon un autre mode de réalisation, l'invention prévoit d'incorporer dans le sandwich crée entre l'enroulement des fils de Litz et le support intérieur de ces fils (celui destiné à être au contact de la bouteille ou du réservoir de grande capacité) un écran électromagnétique partiel ayant pour fonction de ne pas arrêter les ondes électromagnétiques à la fréquence fondamentale du générateur mais ayant pour fonction d'arrêter au moins partiellement les harmoniques crées par le générateur qui sont également captés par la masse métallique que constitue la bouteille ou le réservoir ; en effet la masse métallique de la bouteille étant généralement reliée à la terre pour des raisons de sécurité la ligne de retour à la terre véhicule ainsi sur une distance éventuellement éloignée de l'installation des ondes électromagnétiques hautes fréquences (si l'on ne prend pas les mesures adéquates selon l'invention) qui viennent ainsi perturber les circuits électriques et électroniques qui se trouvent dans le voisinage de l'installation. (Bien entendu en règle générale, les fils de Litz réalisant l'inducteur seront pris en sandwich entre un support intérieur et un support extérieur généralement en matériau isolant, résistant convenablement à une température qui peut être voisine de 100° C au plus).

Comme écran électromagnétique partiel selon l'invention, on prendra par exemple des fils électriques (cuivre ou autre) isolés extérieurement et disposés en nappe parallèlement les uns aux autres dont l'une des extrémités seulement seront reliées électriquement les unes aux autres par un conducteur commun de manière à réaliser un peigne ou un râteau de conducteurs électriques isolés les uns des autres à la manière d'une antenne.

En utilisation, on reliera ledit conducteur commun à la masse de la partie électronique du générateur qui ne sera pas relié à la terre (c'est-à-dire qui ne sera pas relié au boîtier métallique du générateur (masse flottante)) ; en réalisant une connexion électrique de la masse métallique du récipient à la terre et en reliant ainsi le conducteur commun à la masse du générateur on a constaté que l'on éliminait la plupart des perturbations électromagnétiques susceptibles de perturber le fonctionnement correct des appareils électroniques situés à proximité de l'inducteur ; il est bien entendu possible de prévoir également dans cette variante de placer un support extérieur de ces fils de manière à créer un vrai sandwich des supports intérieurs et extérieurs autour des fils.

Selon une autre variante, on pourra prévoir des moyens de fixation entre les extrémités (ou une extrémité et une partie plus centrale pour obtenir des diamètres inférieurs) tels que des systèmes d'accrochage de type connus sous la dénomination commerciale "Velcro" ou tout autre système d'attache de manière à obtenir une ceinture réglable s'adaptant aux différentes circonférences des bouteilles ou récipients utilisés ; lorsqu on utilise des ferrites disposées régulièrement le long de l'inducteur ,on préférera alors n'en disposer que sur une longueur limitée correspondant à la circonférence minimum que l'on veut couvrir.

De préférence également et afin d'améliorer la tenue de l'inducteur au contact du récipient on utilisera de préférence un matériau anti-dérapant pour réaliser le support intérieur des fils destine à être au contact du récipient (de préférence les deux supports seront réalisés dans ce même matériau évitant en particulier de serrer trop fortement l'inducteur sur le récipient notamment lorsqu il s'agit d'une bouteille placée verticalement).

L'invention sera mieux comprise à l'aide des exemples de réalisation suivants, donnés à titre non limitatif, conjointement avec les figures qui représentent :
- la Figure 1 une courbe d'équilibre liquide/vapeur du triméthylsilane, 3MS
- la Figure 2 un premier type d'inducteur fermé pour une bouteille cylindrique,
- la Figure 3 une deuxième type d'inducteur pour une bouteille cylindrique,
- la Figure 4 une troisième type d'inducteur pour une bouteille,
- la Figure 5 un premier exemple d'utilisation de l'invention avec chauffage latéral de la base de la bouteille,
- la Figure 6 un deuxième exemple avec chauffage par le fond,
- la Figure 7 un exemple de réalisation multi-bouteilles,
- la Figure 8 un exemple de réalisation de l'invention pour du gaz contenu dans un réservoir volumineux de forme quelconque,
- la Figure 9 représente un autre exemple de réalisation de l'invention avec un réservoir volumineux,
- la Figure 10 montre les performances obtenues avec le système de la Figure 9,
- la Figure 11 un exemple d'application de l'invention dans le cas du soutirage de liquide dans une bouteille,
- la Figure 12 des courbes de variation de débit de gaz issues d'une bouteille dans le cas de l'art antérieur et dans le cas de l'invention.

La Figure 2 représente un premier type d'inducteur appelé inducteur « cylindrique-standard ». Cet inducteur est dimensionné de telle sorte qu'il s'adapte au diamètre de la bouteille. Il est constitué d'un matériau isolant dans lequel est bobiné un conducteur 1 sous forme de spires 10. Son installation se fait en le glissant le long de la bouteille. Le nombre de spires 10 est adapté au matériau de la bouteille, comme explicité ci-avant. L'ensemble des spires 10 (connectées entre elles en série et/ou parallèle forment une bobine d'induction dont les extrémités 2 et 3 sont connectées au générateur électrique alternatif de fréquence adaptée (non représenté sur la fig. 2). Des éléments en ferrite ou en tôle magnétique 4 (type transformateur) peuvent être installés autour de l'inducteur pour concentrer le champ magnétique vers l'intérieur de l'inducteur, et l'inducteur lui-même peut être réalisé en plusieurs couches. L'inducteur « standard », bien que plus onéreux puisqu'il doit être adapté à chaque diamètre de bouteille et à chaque matériau, est celui qui offre les meilleurs résultats.

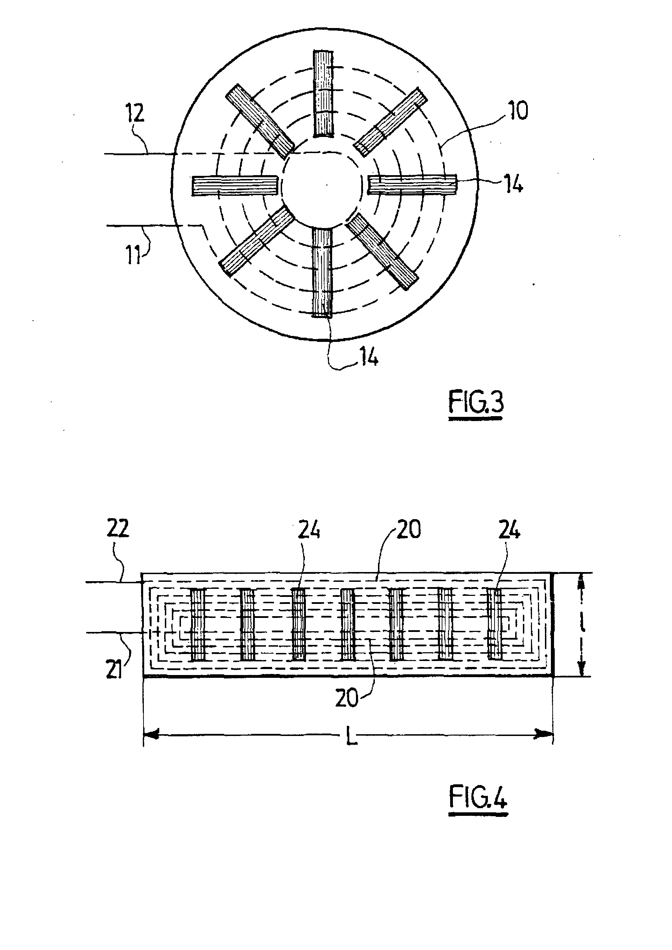

La Figure 3 présente un deuxième type d'inducteur appelé inducteur « pancake-standard ». Cet inducteur est placé sous la base de la bouteille et est adapté à la géométrie de la bouteille. Il est constitué d'un matériau isolant dans lequel sont placés les spires concentriques 10 de fil électrique connecté en 11,12 au générateur électrique alternatif. Le nombre de spires est lui aussi adapté au matériau à chauffer. Des éléments en ferrite ou en tôle magnétique 14 (type transformateur) peuvent être installés en face intérieure de l'inducteur pour concentrer le champ magnétique vers le fond de la bouteille, et l'inducteur lui-même peut être réalisé en plusieurs couches.

La connexion des spires en séries parallèles permet d'adapter l'impédance du circuit à celle du générateur.

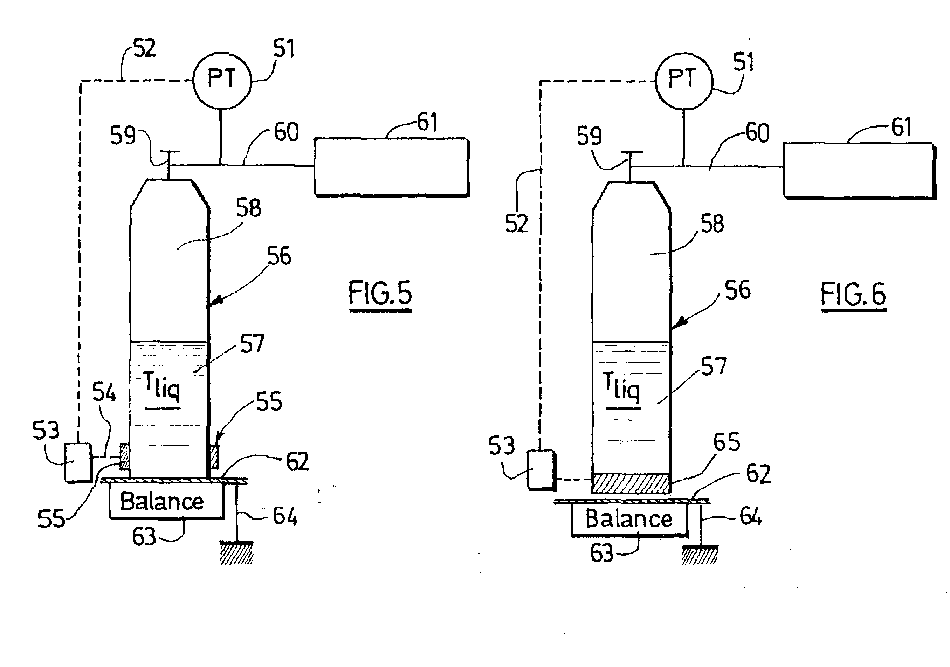

La Figure 4 représente un troisième type d'inducteur appelé inducteur « pancake-ceinture ». Cet inducteur peut s'enrouler autour du pied de la bouteille. Il est en matériau isolant souple sur lequel sont bobinées les spires et est de forme rectangulaire sur la figure (mais toute forme enroulable sur cette bouteille est envisageable) . Il est dimensionné (L) de telle sorte qu'il fasse au moins un tour de la bouteille de plus grand diamètre. Sa hauteur (I) est limitée de façon à ne chauffer que le pied de la bouteille (disposé généralement verticalement). Pour des diamètres de bouteille inférieurs, il peut s'enrouler sur lui-même ou s'enrouler en hélice autour du pied de la bouteille. Son nombre de spires 20 dépend du matériau à chauffer. Des éléments 24 en ferrite ou en tôle magnétique (type transformateur) peuvent être installés autour de l'inducteur pour concentrer le champ magnétique vers l'intérieur de l'inducteur, et l'inducteur lui-même peut être réalisé en plusieurs couches. Un générateur de courant ou de tension est connecté aux extrémités 21 et 22 du conducteur 20. Cette solution - (appelée « inducteur pancake-ceinture ») - bien qu'elle ne fournisse pas le meilleur rendement énergétique, est toutefois largement suffisante dans de nombreuses applications, les débits de gaz issus d'une bouteille contenant un gaz liquéfié étant 5 à 10 fois supérieurs à ceux obtenus au moyen de systèmes de chauffage traditionnels.

La figure 5 décrit une première variante de réalisation d'un chauffage d'une bouteille de gaz liquéfié selon l'invention.

La bouteille 56 contient dans sa partie inférieure un liquide 57 à vaporiser et au-dessus du liquide 57, une phase gazeuse 58 de ce même liquide, le gaz étant conduit vers l'équipement d'utilisation 61 par l'intermédiaire du robinet 59 et de la ligne 60. Sur la ligne 60 est connecté un moyen de mesure 51 de la pression du gaz issu de la bouteille 56. Ce moyen de pression est relié (électriquement par exemple) par la ligne en pointillé 52 au générateur 53, de manière à commander la mise en marche du générateur lorsque la pression mesurée est en-dessous d'une certaine valeur de consigne et à arrêter le générateur lorsque la pression mesurée est supérieure à la valeur de consigne. En mettant en marche le générateur 53 celui-ci, via la ligne de connexion électrique 54, fait circuler un courant alternatif dans l'inducteur 55 (décrit par exemple sur les fig. 2 ou 4) ce qui provoque le chauffage par induction électro-magnétique de la bouteille 56 (et/ou éventuellement du liquide 57). Le fait que l'on ne chauffe que la partie basse de la bouteille et/ou du liquide provoque une mise en circulation du liquide dans la bouteille du fait de la différence de température entre la surface supérieure du liquide et la partie inférieure de celui-ci (ce qui favorise l'uniformité du chauffage du liquide). Pour surveiller l'évolution du degré de remplissage de la bouteille, une balance 63 est placée sous la bouteille 56 avec un feuillard (de cuivre généralement) 62 entre la bouteille et la balance, le feuillard pouvant être mis à la masse par la ligne 64, de manière à éviter une influence du champ magnétique sur la balance.

Sur la Figure 6 est décrite une variante de la fig. 5 fonctionnant de la même façon, l'inducteur des fig. 2 ou 4 étant remplacé par un inducteur par exemple du type décrit sur la fig. 3 placé sous la bouteille 56.

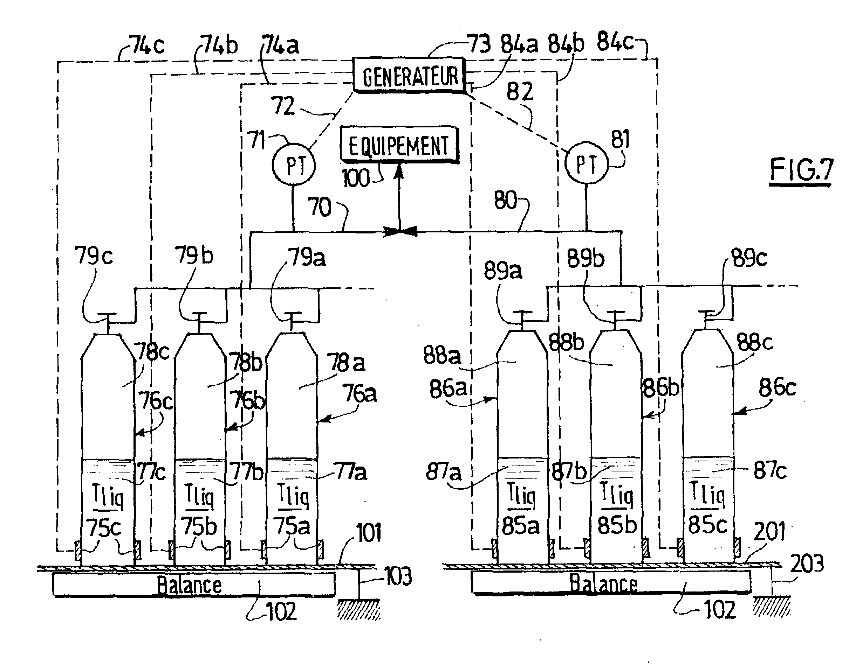

La Figure 7 décrit un système multi-bouteilles chacune étant équipée du système selon l'invention (l'une ou l'autre variante des fig. 5 ou 6, avec un seul moyen de mesure de pression par groupe de bouteilles) ; les systèmes de distribution de gaz liquéfié dans l'industrie des semi-conducteurs utilisent fréquemment deux (ou plusieurs) bouteilles, utilisées en alternance lorsque la pression de l'une d'entre elles chute en dessous d'un certain seuil. Des moyens de contrôle gèrent alors un basculement de l'une sur l'autre bouteille afin de ne pas interrompre la distribution du gaz. L'ensemble multi-bouteilles de la fig. 7 comporte n bouteilles 76a, 76b, 76c, ... (sur la partie gauche de la fig.) connectées via les vannes 79a, 79b, 79c, ... et la ligne 70 à l'équipement 100 et n autres bouteilles identiques 86a, 86b, 86c, ... (sur la partie droite de la fig.) sur lesquelles on « bascule » lorsque la pression dans la bouteille 76 chute en dessous d'une valeur prédéterminée, c'est-à-dire lorsqu'on a soutiré trop rapidement le gaz de la bouteille ou lorsque la bouteille est vide. Les bouteilles 86 sont connectées respectivement via les vannes 89a, 89b et 89c et la ligne 80 à l'équipement 100.

Des moyens de mesure de pression 71 et 81 mesurent la pression du gaz respectivement dans les zones 70 et 80 et un signal (électrique) est envoyé respectivement via 72 et 82 au générateur 73 qui envoie un signal alternatif électrique via respectivement les lignes 74a, 74b, 74c, ... d'une part et 84a, 84b, 84c, ... aux inducteurs, respectivement, 75a, 75b, 75c, et 85a, 85b, 85c, ... pour chauffer par induction le liquide 77a, 77b, 77c, ... et 87a, 87b, 87c, ... de manière à engendrer du gaz 78a, 78b, 78c, ... et 88a, 88b, 88c, ... respectivement, lorsque cela est nécessaire. Un feuillard 101, 201 est placé également entre la base des bouteilles et la balance 102, 202 avec mise à la masse 103, 203.

Le générateur 73 peut, à l'aide d'un capteur de pression 71,81 pour n bouteilles, gérer le chauffage des n inducteurs nécessaires 75,85 en série, en parallèle et/ou en mode séquentiel. Lorsque les n bouteilles (d'un même côté) ont leur pression qui chute en dessous d'un seuil prédéfini, l'automatisme bascule sur les n bouteilles de l'autre côté qui assurent alors la distribution. Les bouteilles qui ont basculé continuent à être chauffées pour que leur pression remonte à la pression correspondante à la température ambiante de façon qu'elles puissent prendre le relais si nécessaire. Le système de chauffage par induction selon l'invention permet un retour rapide à la pression du gaz correspondant à la température ambiante, par rapport aux systèmes chauffants par conduction de l'art antérieur.

La Figure 7 représente l'inducteur de la figure 2. De la même façon, les inducteurs des Figures 3 et 4 peuvent être utilisés.

Pour assurer la distribution d'un gaz liquéfié à très haut débit, des réservoirs plus volumineux que les bouteilles traditionnelles sont parfois utilisés. Un exemple de réalisation de l'invention avec ce type de réservoir est représenté sur la fig. 8. La capacité typique de tels réservoirs est de 450 litres à 1 000 litres environ.

Sur la Figure 8, le réservoir 300 contenant le liquide 302 et le gaz 301 est supporté par l'intermédiaire des pieds 313,314 par la balance 304. L'inducteur de chauffage 303 est placé sous le réservoir, au plus près de celui-ci (voir coupe A-A). Il est relié électriquement par la ligne 305 au générateur 306 qui reçoit un signal de commande par la ligne 307 du capteur de pression 308. Celui-ci est relié via 309, d'une part à la ligne gazeuse 310 issue du réservoir 300 et d'autre part via la ligne 311 à l'équipement 312. Le fonctionnement est identique à celui décrit précédemment. L'inducteur (constitué d'un ou plusieurs éléments connectés en série et/ou parallèle) a la forme voulue pour épouser la partie basse du réservoir 300, sur une longueur plus ou moins importante (dans les deux directions).

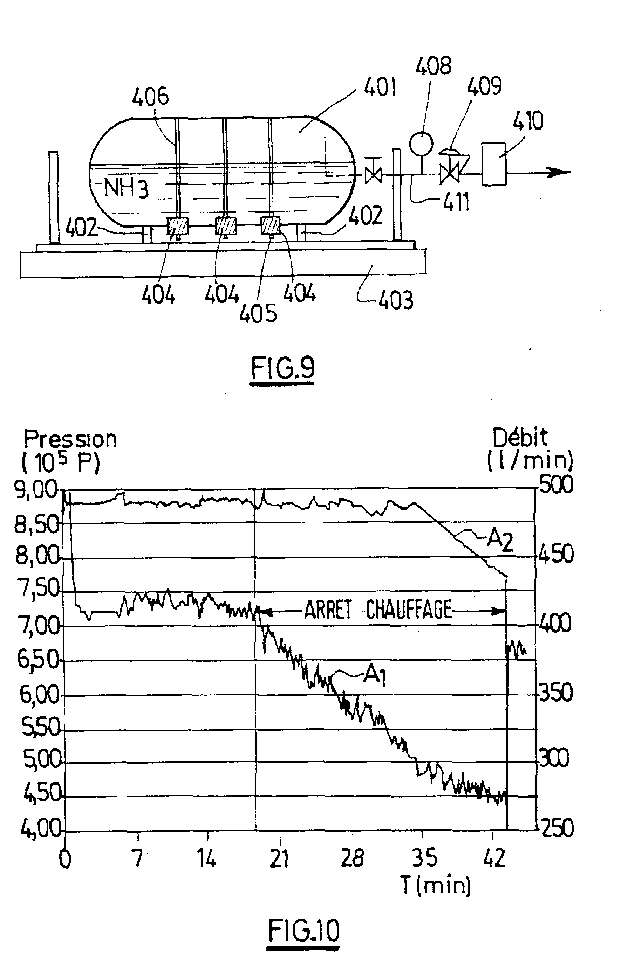

Sur la Fig. 9 est représenté un autre exemple de réalisation de l'invention appliquée aux réservoirs de grande capacité, encore appelés « Ton-Tank » (réservoir disposé généralement horizontalement). Plusieurs inducteurs branchés en parallèle 404 sont utilisés sur la Fig. 9 afin de répartir la puissance de chauffe sur le réservoir 401. Chaque inducteur 404 possède des ferrites 405 permettant de concentrer le champ magnétique et d'améliorer le rendement. Le réservoir 401 repose sur une balance 403 et se trouve raccordé à une ligne de distribution 411 comprenant un capteur de pression 408, un régulateur de pression 409, et un débitmètre 410. Les inducteurs utilisés sont du type « pancake-ceinture » utilisé à plat et sont représentés sur la Fig. 4. Ils sont mis en place sous le fond du réservoir 401 entre les éléments support 402 du réservoir à l'aide de sangles 406 faisant le tour du réservoir.

Le système de la Fig. 9 a été testé avec de l'ammoniac NH₃ sous forme liquéfiée. Le procédé de fabrication des écrans plats à cristaux liquide (LCD), connus également sous la dénomination de TFT (« Thin Film Transistor ») met en oeuvre de l'ammoniac gazeux (NH₃) de haute pureté. Des débits de l'ordre de 500 à 1000 l/min sont nécessaires pour ces fabrications. NH₃ est un gaz liquéfié de faible densité standard mais dont la chaleur de vaporisation est très élevée (environ 1200 kJ.kg⁻¹). A ce titre, il est particulièrement difficile à distribuer à de tels débits puisque la puissance de chauffage nécessaire devient très importante.

Le procédé selon l'invention grâce à son très bon rendement énergétique, permet de limiter la puissance de chauffe installée. Des essais réalisés sur un réservoir de 450 L ont montré qu'une puissance nominale de l'ordre de 8kW suffisait pour obtenir un débit de 500 slm tout en maintenant la pression dans le réservoir. Un calcul théorique permet de montrer qu'à la température ambiante (20°C), une puissance d'environ 7 kW est nécessaire pour vaporiser 500 l/min de NH₃, ceci sans inclure les moindres pertes thermiques. Les mesures de puissance en sortie du générateur d'induction ont indiqué lors des essais des valeurs d'environ 7.5 kW, ce qui veut dire que le rendement entre l'énergie reçue par le récipient et l'énergie effectivement utilisée pour évaporer l'ammoniac était proche de 90 %. L'utilisation du chauffage par induction a permis de démontrer qu'on obtenait selon l'invention un temps de réponse bien plus bref. Moins d'une demi-heure est ainsi nécessaire pour préchauffer 250 kg d'ammoniac contenu dans un réservoir de 450 L de 10°C à 22°C, comparé à plusieurs heures qui seraient nécessaires avec un chauffage résistif traditionnel.

Les performances obtenues avec un réservoir de 450 L de NH₃ pour un débit de 500 l/min sont résumées sur la Fig. 10. La Courbe A₁ représente la pression du gaz (en valeur absolue) exprimée en 10⁵ Pascal en fonction du temps exprimé en minutes. La courbe A₂ représente le débit de gaz en l/min (ramené, comme toutes les mesures de débit de la présente demande, à une valeur dans les conditions normales de température et de pression, c'est-à-dire en « standard liter per min. » - slm - selon la dénomination anglo-saxonne) en fonction du temps. Le chauffage du récipient est arrêté à l'instant T sur la Fig. 10 (environ 19 mn après le début du soutirage). La pression du gaz qui se maintient constante entre 7 et 7,5 x 10⁵ Pa malgré le soutirage gazeux s'effondre dès que le chauffage est arrêté (T) courbe A₁. Par contre, le débit de liquide se maintient encore une bonne dizaine de minutes après l'arrêt du chauffage, l'ammoniac profitant de l'énergie emmagasinée jusqu'alors grâce au chauffage.

L'invention s'applique aux gaz liquéfiés de préférence, mais aussi aux récipients ne contenant qu'une phase gazeuse ou une phase supercritique dans le même récipient. Elle s'applique notamment aux gaz dits spéciaux (notamment SF₆, N₂O, NH₃, HCl, Cl₂, etc...) utilisés dans la réalisation des semi-conducteurs (notamment les précurseurs) ainsi que des gaz du type CO₂ (gazeux et/ou liquide et/ou supercritique) ou même du type acétylène (ou autre gaz de soudage ou utilisé en soudage).

### Exemple comparatif :

L'exemple ci-après a été réalisé sur des bouteilles de même volume (10 L) contenant toutes du C₄F₈.

Deux types de chauffage ont été comparés :
- chauffage du pied de la bouteille à l'aide d'une ceinture résistive de 1 kW composée d'éléments à forte densité de puissance reliés entre eux,
- chauffage par induction avec un générateur capable de délivrer une puissance d'environ 900 W - 1 kW.

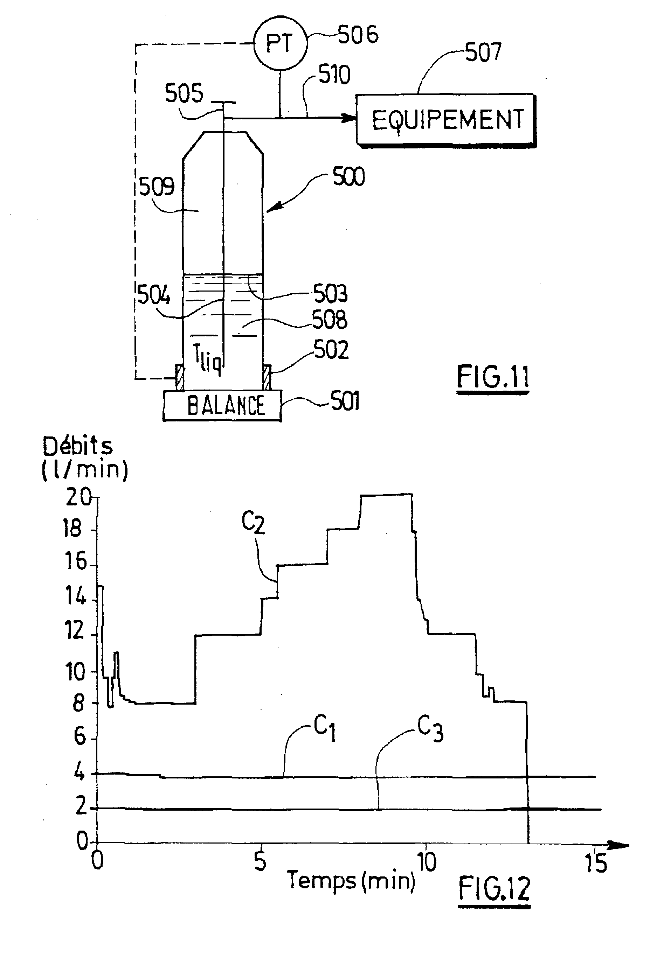

Pour référence, un essai a également été réalisé sans chauffage. La Fig. 12 montre les débits de C₄F₈ gazeux sous-tirés dans chaque cas :
- la courbe C₁ correspond au chauffage avec la ceinture résistive,
- la courbe C₂ correspond au chauffage par induction selon l'invention,
- la courbe C₃ correspond à une absence de chauffage.

Les courbes de la Fig. 12 mettent nettement en évidence le bénéfice de l'invention (courbe C₂) par rapport au cas de l'utilisation d'une ceinture électrique résistive ayant la même puissance nominale. Les débits obtenus sont de l'ordre de 5 fois supérieurs (20 l/min comparé à 4 l/min). Par comparaison, le débit selon l'invention est dix fois supérieur au cas où l'on ne réalise aucun chauffage de la bouteille.

### Les différentes applications de l'invention :

Un première application pour laquelle la chauffage de réservoirs de gaz liquéfiés selon l'invention peut apporter un réel avantage est la distribution de ces gaz liquéfiés à très haut débit.

On peut dans un premier cas appliquer l'invention en utilisant la pression de la bouteille pour contrôler le chauffage. La courbe d'équilibre liquide-vapeur du gaz liquéfié permet de connaître à tout instant la valeur de la température du liquide à l'intérieur du réservoir. Il est ainsi possible de chauffer le réservoir juste ce qu'il faut pour maintenir la pression afin qu'elle ne dépasse pas la température ambiante. Sous réserve qu'il n'y ait pas de point plus froid le long des lignes de distribution en aval, ceci permet de s'affranchir du chauffage desdites lignes de distribution puisque le risque de recondensation du gaz dans la ligne de distribution est alors évité.

On peut dans un second cas, appliquer l'invention au maintien à température constante du réservoir. Le chauffage des lignes de distribution en aval devient alors indispensable si la température à maintenir au niveau du réservoir est supérieure à la température ambiante le long des lignes de distribution.

On peut enfin appliquer l'invention au conditionnement des gaz liquéfiés par transfert en phase gazeuse : lorsqu'on est capable de sous-tirer de forts débits en phase gazeuse d'un réservoir de gaz liquéfié, ceci permet de conditionner ce gaz liquéfié dans d'autres emballages. Les débits obtenus à l'aide d'un chauffage selon l'invention permettent d'augmenter sensiblement la productivité de telles installations, pour autant que la capacité de refroidissement des emballages destinés à recevoir le gaz liquéfié soit au moins équivalente à celle du chauffage par induction.

Ce type de transfert en phase gazeuse offre l'avantage de purifier le gaz liquéfié puisqu'il revient à réaliser une distillation à un étage. L'induction permet en outre de limiter la température de surface du réservoir mère, évitant ainsi la désorption d'espèces volatiles des parois du réservoir susceptibles de contaminer le gaz liquéfié.

Une autre application de l'invention consiste à sous-tirer le gaz dans sa forme liquide dans une bouteille : il devient alors possible de pousser le gaz sus forme liquéfiée par un tube plongeur en utilisant sa propre tension de vapeur plutôt que de recourir à un gaz vecteur tel que l'azote par exemple qui risque de se dissoudre dans le gaz liquéfié. On procède dans ce cas comme par exemple décrit sur la Fig. 11 : sur cette figure, la bouteille 500 repose sur la balance 501 (afin de contrôler son poids, donc son vidage). Au pied de la bouteille on dispose un ruban inductif 502 comme décrit ci-avant avec son générateur associés qui chauffe le liquide 508, qui se vaporise en 509, la pression du gaz en 509 augmentant de telle sorte que le liquide 508 peut remonter dans le tube plongeur 504, le robinet 505 et être distribué par la canalisation 510 à l'équipement 507, sous forme liquéfiée. Un contrôle de régulation de pression 506 sur la ligne 510 commandant le chauffage de 502 est également prévu.

## Revendications

1. Système pour délivrer du gaz stocké dans un récipient notamment sous forme liquéfiée, ledit récipient comportant dans sa partie inférieure une phase liquéfiée dudit gaz et dans sa partie supérieure une phase gazeuse dudit gaz, ce récipient comportant un moyen pour le connecter à un moyen d'utilisation ainsi qu'un moyen de chauffage , **caractérisé en ce que** le gaz liquéfié et/ou l'enveloppe du récipient sont des éléments conducteurs électriques et **en ce que** lesdits moyens de chauffage sont constitués par des moyens d'induction électromagnétique capables de créer un champ magnétique alternatif dans l'enveloppe et/ou le liquide de manière à chauffer l'enveloppe et/ou le liquide dans le récipient.

2. Système selon la revendication 1, **caractérisé en ce que** le champ magnétique alternatif est créé à l'aide d'un générateur fonctionnant à une fréquence comprise entre 50 Hz et 4 MHz.

3. Système selon l'une des revendications 1 ou 2, **caractérisé en ce que** le récipient est placé sur une balance afin de surveiller le niveau de liquide dans celui-ci.

4. Système selon la revendication 3, **caractérisé en ce que** l'on dispose une feuille de conducteur électrique entre l'inducteur et la balance afin de préserver celle-ci des perturbations du champ magnétique.

5. Système selon l'une des revendications précédentes, **caractérisé en ce que** le générateur électrique qui engendre le champ magnétique alternatif alimente plusieurs inducteurs.

6. Système selon l'une des revendications 1 à 5, **caractérisé en ce que** les moyens de chauffage sont constitués par au moins une spire d'un conducteur, de préférence entourant au moins 90 % du récipient.

7. Système selon la revendication 6, **caractérisé en ce que** chaque spire est d'épaisseur au moins égale à 1 mm.

8. Système selon l'une des revendications 1 à 7, **caractérisé en ce que** le récipient est une bouteille, disposée généralement verticalement.

9. Système selon l'une des revendications 1 à 7, **caractérisé en ce que** le récipient est du type « Ton-Tank » disposé généralement horizontalement.

10. Système selon l'une des revendications 1 à 9, **caractérisé en ce qu'**un écran électromagnétique partiel est disposé entre les moyens d'induction et le récipient.

11. Système selon l'une des revendications 1 à 10, **caractérisé en ce que** lesdits moyens de chauffage sont en forme de ceinture réglable comportant des moyens de fixation permettant de s'adapter aux différentes circonférences des récipients utilisés.

12. Utilisation du système selon l'une des revendications 1 à 11 pour fournir un gaz à un point d'utilisation à une pression supérieure à la pression d'équilibre du gaz avec le liquide dans la bouteille à température ambiante.

13. Utilisation du système selon l'une des revendications 1 à 11 pour augmenter le débit de gaz sans élever substantiellement la température des parois du récipient.
